(19) Europäisches Patentamt
European Patent Office
Office européen des brevets

(11) **EP 2 420 360 B1**

(12) **EUROPÄISCHE PATENTSCHRIFT**

(45) Veröffentlichungstag und Bekanntmachung des Hinweises auf die Patenterteilung:
**07.12.2016  Patentblatt 2016/49**

(51) Int Cl.:
***B25J 9/16*** *(2006.01)*

(21) Anmeldenummer: **11006024.1**

(22) Anmeldetag: **22.07.2011**

(54) **Verfahren und Programmiermittel zum Programmieren eines Roboters**

Method and programming means for programming a robot

Procédé et moyen de programmation destinés à la programmation d'un robot

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.08.2010  DE 102010034683**

(43) Veröffentlichungstag der Anmeldung:
**22.02.2012  Patentblatt 2012/08**

(73) Patentinhaber: **KUKA Roboter GmbH 86165 Augsburg (DE)**

(72) Erfinder: **Weiß, Martin, Dr.
86459 Margertshausen (DE)**

(74) Vertreter: **Schlotter, Alexander Carolus Paul et al
Wallinger Ricker Schlotter Tostmann
Patent- und Rechtsanwälte Partnerschaft mbB
Zweibrückenstrasse 5-7
80331 München (DE)**

(56) Entgegenhaltungen:
**EP-A1- 1 777 600     EP-A1- 2 345 512
EP-A2- 2 082 850     DE-A1-102008 027 475
US-A- 5 396 160      US-A1- 2006 181 236
US-B1- 6 292 715**

**Beschreibung**

Die vorliegende Erfindung betrifft ein Verfahren und ein Programmiermittel zum Programmieren eines Roboters, insbesondere eines Industrieroboters.

Bei der Programmierung von Industrierobotern werden Posen, in denen der Roboter beispielsweise ein Werkstück aufnehmen, ablegen oder ein Werkzeug positionieren soll, vorgegeben, die der Roboter anschließend auf vorgegebenen Bahnen, beispielsweise Geraden oder Kreisbögen im kartesischen oder Gelenkkoordinatenraum, anfährt.

Während dabei herkömmlicherweise der Roboter vorab manuell in die einzelnen Posen gefahren und diese abgespeichert werden (sogenanntes "Teachen"), gestatten heutige CAD-Programme, mit denen ein zu bearbeitendes Werkstück entworfen wird, oftmals zusätzlich die Generierung ausgezeichneter Punkte und Richtungen relativ zum Werkstück, etwa eines Lots vorgegebener Länge auf der Werkstückoberfläche. Indem solche vom CAD-Programm generierte Positionen bei der Programmierung als Soll-Positionen eines roboterfesten Werkzeugreferenzsystems ("Tool Center Point" TCP) vorgegeben werden, können in einfacher und präziser Weise zum Beispiel Posen vorgegeben werden, in denen das Roboterwerkzeug senkrecht zur Werkstückoberfläche orientiert ist und von dieser einen vorgegebenen Abstand aufweist.

Nachteilig geht bei beiden Vorgehensweisen der Bezug zum Werkstück selber verloren, sobald nur noch die Posen des Roboters bzw. die vom CAD-Programm generierten Arbeitspunkte gespeichert und der Programmierung zugrundegelegt werden. Wird beispielsweise das zu bearbeitende Werkstück mittels einer Werkstückaufnahme verdreht und/oder -schoben, stimmen Orientierung und Abstand des Werkzeugs in den geteachten bzw. CAD-generierten Arbeitspunkten nicht mehr mit den ursprünglichen Vorgaben überein, das Werkzeug steht beispielsweise nicht mehr senkrecht auf der Oberfläche des verdrehten Werkstückes, was ein aufwändiges Nachteachen erforderlich macht und so die Flexibilität der Automatisierung reduziert.

Die EP 1 777 600 B1 schlägt vor, eine für ein Werkstück generierte Bahn durch entsprechende Skalierung auf ein anderes Werkstück zu übertragen.

Die Abspeicherung der Posen bzw. CAD-generierten Arbeitspunkte ohne Bezug zum Werkstück bedingt noch weitere Nachteile. So kann zwar durch die Generierung von Arbeitspunkten mit vorgegebenem Abstand und vorgegebener Orientierung durch das CAD-Programm ein entsprechender Werkzeugabstand und eine entsprechende Werkzeugorientierung in diesen diskreten Punkten sichergestellt werden, was beispielsweise beim Punktschweißen oder bei Pick&Place-Aufgaben ausreichen kann. Die Bahngenerierung durch diese Punkte, die bei der Programmierung nur noch ohne Bezug zum Werkstück vorliegen, kann jedoch nicht sicherstellen, dass auch zwischen diesen Punkten Abstand bzw. Orientierung beibehalten werden, wie dies etwa beim Bahnschweißen oder Laserschneiden erforderlich ist. Heutige Programmiermittel gestatten lediglich die Vorgabe einer Orientierung relativ zur Bahn oder der Umgebung ohne Bezug zur Werkstückoberfläche.

Die US 6,292,715 B1 offenbart ein Offline-Planungssystem samt -verfahren, zur Erhöhung des Automatisierungsgrades bei der Generierung eines Roboterprozesses. Dazu wird ein System vorgeschlagen, welches über eine Bedienerschnittstelle die Auswahl eines vordefinierten Templates ermöglicht, wobei die Templates geometrische Prozesselemente beinhalten.

Die EP 2 082 850 A2 offenbart eine Vorrichtung zur Erzeugung eines Roboterprogramms. Ziel der Erfindung ist es, visuelle Sensordaten zur automatischen Programmierung eines Roboters zu nutzen und Fehler in der Form des Werkstücks zu erfassen. Dabei wird zunächst ein Modell des zu bearbeitenden Werkstücks erstellt. Dieses Modell wird entlang der Prozesslinie des Roboters segmentiert. Auf dieser Basis wird ein Roboterprogramm erstellt, um jedes Segment zu bearbeiten.

Die US 2006/0181236 A1 offenbart ein Verfahren und ein System zum Programmieren eines Industrieroboters, um relativ zu definierten Positionen auf einem Objekt zu verfahren. Ziel der Erfindung ist es, eine Kalibration und eine Programmierung des Roboters zu vereinfachen. Dazu wird vorgeschlagen verschiedene Punkte auf der Oberfläche des Werkstücks in einen Koordinatensystem des Roboters abzuspeichern. Weiterhin wird die Orientierung und die Position eines geometrischen Modells des Objekts zum Koordinatensystem des Roboters referenziert, indem das Modell mit den realen Punkten abgeglichen wird.

Die DE 10 2008 027 475 A1 offenbart eine Vorrichtung und ein Verfahren zur rechnergestützten Generierung einer Manipulatorbahn. Aufgabe ist es, eine Manipulatorbahn zu verbessern. Dabei orientiert sich der Bahngenerator an der zu lösenden Prozessaufgabe und generiert in Abhängigkeit davon die Manipulatorbahn.

Die US 5,396,160 A offenbart ein Verfahren zur echtzeitigen Planung einer Roboterbahn auf Basis eines mathematischen Modells. Ziel der Erfindung ist es, ein Verfahren anzugeben, um auf Basis eines mathematischen Modells direkt einen Pfad zu planen. Dazu kann ein CAD-Modell verwendet werden. Ein weiteres Ziel ist es Aufwendungen zur Pfadinterpolation zu vermieden. Dazu wird zunächst auf Basis des mathematischen Modells ein Pfad mit einer ausreichenden Anzahl an Datenpunkten generiert. Danach werden gewünschte Maschinendaten ausgewählt, z.B. die Robotergeschwindigkeit. In einem letzten Schritt wird die Rückwärtskinematik des Roboters berechnet.

Die EP 1 777 600 A1 offenbart eine Off-Line Teach-Vorrichtung um ein Roboterprogramm zu generieren. Ziel der Erfindung ist es, bereits bestehende Programme weiterverwenden zu können, wenn sich das neu zu bearbeitende Werkstück nur geringfügig von dem Werkstück unterscheidet, auf Basis dessen das bestehende Programm erstellt wurde.

Die EP 2 345 512 A1 offenbart ein Verfahren zum finden realisierbarer Gelenktrajektorien für einen Roboter mit n-Freiheitsgraden und einem rotationsinvarianten Prozess. Ziel der Erfindung ist die Verbesserung von Fräsrobotern. Dazu wird in einem ersten Schritt geometrische Information des Werkstücks empfangen. Dann wird geometrische Information des Werkzeugs empfangen und eine Pfadtrajektorie, welche abhängig von der Zeit die Pfadpositionen angibt.

Insofern ist insbesondere eine automatische Bahngenerierung auf einem Werkstück mit komplexerer Oberflächengeometrie heute nicht direkt möglich, sondern muss approximativ erfolgen, indem im CAD-Programm einer Vielzahl von Zwischen- oder Hilfspunkten generiert und der Programmierung zugrundegelegt wird.

Aufgabe der vorliegenden Erfindung ist es, das Programmieren eines Roboters zu verbessern.

Diese Aufgabe wird durch ein Programmiermittel mit den Merkmalen des Anspruchs 1 gelöst. Anspruch 9 stellt ein Verfahren, Anspruch 10 ein Computerprogrammprodukt, insbesondere einen Datenträger bzw. ein maschinenlesbares Speichermedium, zur Durchführung eines erfindungsgemäßen Verfahrens unter Schutz. Die Unteransprüche betreffen vorteilhafte Weiterbildungen.

Gemäß einem Aspekt der vorliegenden Erfindung wird vorgeschlagen, den Werkstückbezug bei der Programmierung beizubehalten, indem im Programmiermittel selber ein, gegebenenfalls auf notwendige geometrische Parameter reduziertes, Modell des Werkstücks vorhanden ist, auf das das Programmiermittel zugreifen und so beispielsweise für eine Bahnplanung erforderliche Daten wie etwa Oberflächentangenten, -normalen und dergleichen selbst ableiten kann.

Allgemeiner weist ein erfindungsgemäßes Programmiermittel zum Programmieren eines Roboters ein Parameterverarbeitungsmittel zum Ableiten von kinematischen Modelldaten aus geometrischen Parametern eines Modells eines Interaktionsobjektes des Roboters auf Basis von Programmanweisungen für den Roboter auf.

Dabei kann ein Mittel im Sinne der vorliegenden Erfindung Hard- und/oder Software umfassen, also beispielsweise als Computer oder Teil eines Computers und/oder als Programm oder Programmteil ausgebildet sein, insbesondere eine oder mehrere Unterroutinen, Daten und dergleichen umfassen. Ein Parameterverarbeitungsmittel kann somit beispielsweise eine softwaretechnisch implementierte Funktionalität einer Programmierumgebung, insbesondere einer Programmiersprache, zum Programmieren eines Roboters, und/oder einen Mikroprozessor umfassen, auf dem eine solche Funktionalität hardwaretechnisch ausgeführt wird.

Ein Modell des Interaktionsobjektes kann insbesondere ein CAD-Modell eines Werkstückes umfassen, das mit dem Roboter zu bearbeiten ist. Zusätzlich oder alternativ kann es auch ein CAD-Modell einer Roboterumgebung umfassen, in der der Roboter agieren soll, um beispielsweise Kollisionen zu vermeiden. Ein CAD-Modell kann insbesondere ein Kanten- oder Drahtmodell, ein Flächenmodell, insbesondere ein sogenanntes NURBS-Modell ("Non-Uniform Rational B-Spline"), ein Volumenmodell oder ein Körpermodell sein, wie es beim rechengestützten Konstruieren erstellt bzw. modifiziert wird.

Das Modell des Interaktionsobjektes, beispielsweise das CAD-Modell eines Werkstückes, kann durch geometrische Parameter ganz oder teilweise definiert sein oder generiert werden, i.e. generiert definiert werden. Solche geometrischen Parameter können insbesondere geometrische Kenngrößen wie Höhe, Länge, Breite, Durchmesser, Kegelwinkel und dergleichen von Geometrieprimitiven wie Quadern, Zylindern, Kegeln und dergleichen umfassen. Vorzugsweise umfassen sie eine auch zur Beschreibung komplexer, nicht-trivialer Oberflächen geeignete Parametrisierung, insbesondere sogenannte Kontrollpunkte von NURBS-Flächen und dergleichen. Sie können auch Parameter in, vorzugsweise standardisierten, systemneutralen bzw. CAD-Datentaustauschformaten wie VDA-FS, IGES, SAT, ICF, STER, VRML 97-ISO/IEC 14722, STL und dergleichen umfassen.

Aus solchen geometrischen Parametern kann das Parameterverarbeitungsmittel kinematische Modelldaten ableiten, beispielsweise indem es Unterroutinen aufweist, die Unterroutinen des das Modell erstellenden Mittels, etwa eines CAD-Programms, entsprechen bzw. diese im erforderlichen Funktionalumfang nachbilden. So kann beispielsweise bei bekannter, durch die geometrischen Parameter vorgegebener Mittellinie eines Zylinders zu jeder Axiallage eine Normale durch jeden Oberflächenpunkt abgeleitet und mittels dieser die Position eines Punktes in einem vorgegebenen Abstand zur Oberfläche und eine Richtung normal oder tangential zur Oberfläche abgeleitet werden.

Kinematische Modelldaten können Positionen, insbesondere Lagen und/oder Orientierungen, von Punkten, Linien, Flächen, Räumen, Referenzsystemen und/oder Richtungen relativ zu ausgezeichneten Merkmalen, insbesondere einer Oberfläche des Modells des Interaktionsobjektes umfassen. Erfindungsgemäß leitet das Parameterverarbeitungsmittel aus den geometrischen Parametern des Modells, beispielsweise für relevante Oberflächenpunkte, die sich beispielsweise aus der Bahnplanung, insbesondere einer Optimierung, ergeben oder für die Bahnplanung geteached wurden, eine Oberflächennormale ab, die zusammen mit einem Tangenten- und einem Binormalenvektor ein begleitendes Koordinatensystem definiert, dessen Ursprung vorteilhafterweise auf der Oberfläche des Modells liegen kann. Derart kann zum Beispiel einfach eine Bahn generiert werden, bei der ein Werkzeug bzw. ein roboterfestes Koordinatensystem immer in einer vorgegebenen Orientierung zur Oberfläche, beispielsweise senkrecht hierzu, und/oder in einem vorgegebenen Abstand, beispielsweise auf dem Werkstück, positioniert ist. Insbesondere können kinematische Modelldaten somit Daten umfassen, die eine Kinematik des Roboters beim Ausführen einer Programmanweisung, etwa dem Abfahren einer Bahn, beschreiben. Bevorzugt werden kinematische Modelldaten (wie etwa die oben genannte Oberflächennormale, Tangenten- und/oder Binormalenvektor) punktweise abgeleitet. Gleichermaßen können sie auch als, vorzugsweise stetige, Funktion abgeleitet werden.

Programmanweisungen für den Roboter können insbesondere Bewegungen und/oder Aktionen des Roboters definieren. Das Parameterverarbeitungsmittel leitet die hierfür benötigten kinematischen Modelldaten aus den geometrischen Parametern ab. Befindet sich beispielsweise der Roboter tatsächlich, i.e. im Teach-In-Betrieb, oder theoretisch gemäß Programmablauf, in einer bestimmten Pose und soll, ausgehend von dieser, eine Gerade auf einem Werkstück abfahren, kann das Parameterverarbeitungsmittel für die Interpolationspunkte des Bahninterpolators jeweils die Oberflächennormale auf das Werkstück ableiten und den TCP des Roboters so positionieren, dass er mit Abstand Null auf dem Werkstück liegt und eine definierte Werkzeugstoßrichtung mit der Oberflächennormale antiparallel orientiert ist.

Hierzu leitet in einer bevorzugten Ausführung das Parameterverarbeitungsmittel kinematische Modelldaten während des Programmierens, insbesondere während des Betriebs des Roboters ab. Insofern wird beispielsweise eine vom Anwender online gesteuerte Bewegung und/oder Aktion des Roboters, insbesondere ein Teach-In-Betrieb, als eine Form des Programmierens im Sinne der vorliegenden Erfindung verstanden, während eine andere Form des Programmierens im Sinne der vorliegenden Erfindung die Erstellung und Abspeicherung von Programmanweisungen offline vorab umfasst.

Vorteilhafterweise umfasst ein erfindungsgemäßes Programmiermittel ein Bahnbestimmungsmittel, beispielsweise einen geometrischen Bahnplaner mit Interpolator oder Optimierer, zum Bestimmen einer Bahn des Roboters, der mit dem Parameterverarbeitungsmittel zusammenwirkt, beispielsweise Daten von diesem empfängt und/oder an dieses überträgt, um so auf Basis des Modells des Interaktionsobjektes die Bahn zu bestimmen. Wie vorstehend ausgeführt, kann hierzu beispielsweise das Bahnbestimmungsmittel Punkte vorgeben, für die das Parameterverarbeitungsmittel kinematische Modelldaten ableitet, die ihrerseits vom Bahnbestimmungsmittel bei der Bahngenerierung, beispielsweise der Bestimmung eines nächsten Interpolationspunktes, berücksichtigt werden. Ein Optimierer löst zum Beispiel die nicht triviale Aufgabe "fahre den TCP auf kürzestem Weg innerhalb der Oberfläche von A nach B", was die Lösung einer differentialgeometrischen Grundaufgabe umfasst.

In einer bevorzugten Ausführung können ein oder mehrere Relativparameter, insbesondere Abstände und/oder Winkel, der kinematischen Modelldaten relativ zu dem Modell des Interaktionsobjektes vorgegeben werden. Zum Beispiel können als kinematische Modelldaten eine unter einem bestimmten Winkel gegen die Oberflächennormale geneigte Richtung oder ein Koordinatensystem abgeleitet werden, dessen Ursprung auf der Werkstückoberfläche liegt und das eine Koordinatenachse parallel zur Oberflächennormale und/oder eine Koordinatenachse parallel zu einer Bahntangente aufweist.

So kann beispielsweise eine im roboterfesten TCP-System definierte Werkzeugstoßrichtung in einem vorgegebenen Winkel gegen die Werkstückoberfläche orientiert und/oder der TCP in einem vorgegebenen Abstand über die Werkstückoberfläche geführt werden. Dies ist insbesondere auch bei einer Programmierung in Form einer Online-Steuerung vorteilhaft, da so der Anwender beispielsweise den TCP zwangsgeführt entlang der Werkstückoberfläche bewegen kann. Hierzu kann insbesondere der oben beschriebene Optimierer bzw. Bahnplaner verwendet werden.

Das Modell des Interaktionsobjektes oder ein Teil hiervon, insbesondere die zur Ableitung kinematischer Modelldaten erforderlichen geometrischen Parameter, können in einer bevorzugten Ausführung als ein Datenobjekt implementiert sein. Dann kann das Parameterverarbeitungsmittel insbesondere eine Funktions- oder Objektdefinition einer, vorzugsweise objektorientierten, Programmiersprache umfassen, so dass in der Programmiersprache durch einen oder mehrere Befehle derart auf das Datenobjekt zugegriffen werden kann, dass aus seinen geometrischen Parametern abgeleitete kinematische Modelldaten zur Verfügung gestellt werden. Beispielsweise kann das Parameterverarbeitungsmittel einen Datentyp "CAD_Modell()" umfassen, dessen Variablen mit geometrischen Parametern eines CAD-Modells belegt werden können, und der bei Aufruf etwa mit einer kartesischen Position (x,y,z) den hierzu nächstgelegenen Punkt auf einer Oberfläche des Modells zurückgibt. Die Belegung des Datenobjektes mit geometrischen Parametern eines CAD-Modells kann auch durch Aufruf eines entsprechenden CAD-Programms oder Rückgriff auf dessen abgespeicherte Daten vorab oder bei Bedarf erfolgen. In einer bevorzugten Ausführung ist ein Datenobjekt LIN_IN_OBJECT vorgesehen, das die kürzeste Verbindung zweier Punkte in der Oberfläche zurückgibt. Dieser Bewegungstyp stellt eine erfindungsgemäße Verallgemeinerung des bekannten Datenobjekts LIN dar, das als kürzeste Verbindung zweier Punkte im Raum eine Gerade zurückgibt.

Weitere Vorteile und Merkmale ergeben sich aus den Unteransprüchen und den Ausführungsbeispielen. Hierzu zeigt, teilweise schematisiert:

Fig. 1:     eine Werkstückoberfläche mit einer nach dem Stand der Technik programmierten Roboterbahn;

Fig. 2:     die Werkstückoberfläche nach Fig. 1 mit einer anderen nach dem Stand der Technik programmierten Roboterbahn;

Fig. 3: die Werkstückoberfläche nach Fig. 1 mit einer nach einer Ausführung der vorliegenden Erfindung programmierten Roboterbahn; und

Fig. 4: ein Programmiermittel nach einer Ausführung der vorliegenden Erfindung.

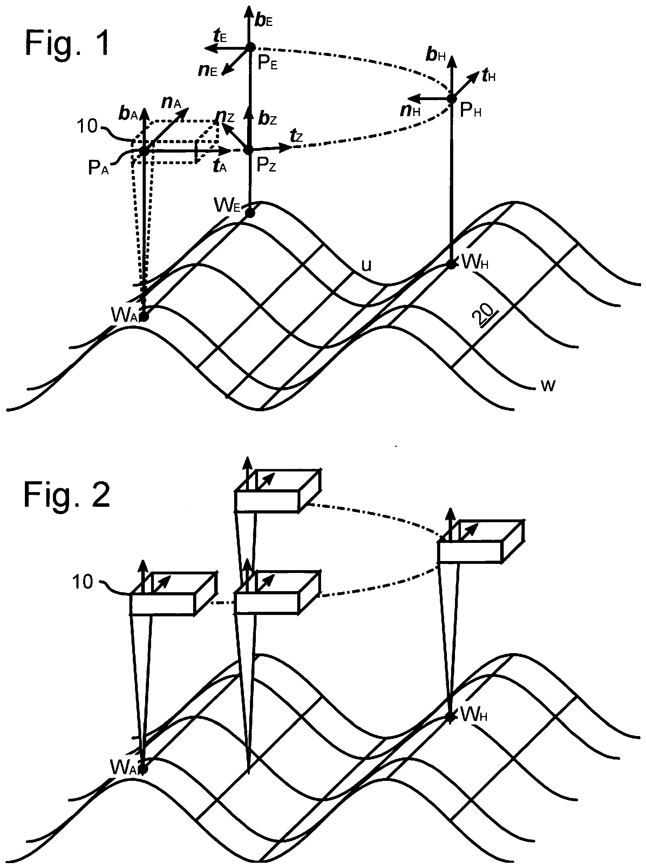

Fig. 1 zeigt einen Teil einer komplexen, nicht-trivialen Oberfläche eines Werkstückmodells 3, die durch NURBS beschrieben wird. Die Kontrollpunkte oder Basisfunktionen dieser NURBS generieren die Oberfläche, so dass diese beispielsweise in einem kartesischen Koordinatensystem (nicht dargestellt) durch $x = x(u, w)$, $y = y(u, w)$ und $z = z(u, w)$ mit den beiden Oberflächenparametern $u$, $w$ definiert ist.

Ein herkömmliches CAD-Programm kann für ausgewählte Punkte $W_A$, $W_H$ und $W_E$ des Werkstücks 3 vorab Arbeitspunkte $P_A$, $P_H$ bzw. $P_E$ generieren, die einen vorgegebenen Abstand zur Werkstückoberfläche aufweisen, und in diesen Punkten die Oberflächennormale $b_A$, $b_H$ bzw. $b_E$ vorgeben.

Ein herkömmliches Programmiermittel, etwa die Hochsprache KRL der Anmelderin, gestattet es, mittels CIRC-Befehl durch diese Arbeitspunkte eine kreisbogenförmige Roboterbahn zu legen, die in Fig. 1 strichpunktiert angedeutet ist. Dabei kann durch die Vorgabe "\$circ-type = #base \$ori_type = #const" vorgegeben werden, dass ein Werkzeugreferenzsystem seine Orientierung relativ zur generierten Bahn beibehält. Zur Veranschaulichung ist in Fig. 1 neben den Tangenten-, Normalen- und Binormalenvektoren $t, n, b,$ des begleitenden Dreibeins strichliert auch ein Roboterwerkzeug 10 eingezeichnet, das auf dieser Bahn geführt wird. Man erkennt, dass in jedem Bahnpunkt, insbesondere in den Arbeitspunkten $P_A$, $P_H$ bzw. $P_E$ das Werkzeug 10 bzw. das seine Position definierende Koordinatensystem TCP die gleiche Orientierung zur Bahn aufweist und in den Arbeitspunkten $P_A$, $P_H$ bzw. $P_E$ wie gewünscht senkrecht zur Werkstückoberfläche diese gerade berührt.

Alternativ kann durch die Vorgabe "\$circ-type = #path \$ori_type = #const" auch eine zur Umgebung konstante Orientierung vorgegeben werden. Fig. 2 zeigt die entsprechende Bahn, wobei hier das Roboterwerkzeug 10 in den Arbeitspunkten $P_A$, $P_H$ bzw. $P_E$ sowie einem in Fig. 1 mit $P_Z$ bezeichneten Zwischenpunkt eingezeichnet ist. Auch hier berührt das Werkzeug 10 in den Arbeitspunkten $P_A$, $P_H$ bzw. $P_E$ wie gewünscht gerade die Werkstückoberfläche und steht dort senkrecht zur dieser.

Man erkennt jedoch in beiden Figuren, dass mit der herkömmlichen Programmierung, bei der nach Erstellung der Arbeitspunkte $P_A$, $P_H$ bzw. $P_E$ durch das CAD-Programm der Bezug zum CAD-Modell und der in ihm definierten Oberfläche $x(u, w)$, $y(u, w)$, $z(u, w)$ verloren geht, zum einen das Werkzeug 10 zwischen den Arbeitspunkten $P_A$, $P_H$ bzw. $P_E$ weder senkrecht auf der Oberfläche steht noch den gewünschten Abstand zu dieser aufweist. Zum anderen müssen beispielsweise bei einer exemplarischen Verdrehung des Werkstücks 3 um die Achse $b_A$ um 45° die Arbeitspunkten $P_A$, $P_H$ bzw. $P_E$ aufwändig mit verdreht oder nachgeteacht werden. Eine automatische Bahngenerierung auf der Werkstückoberfläche ist nicht möglich.

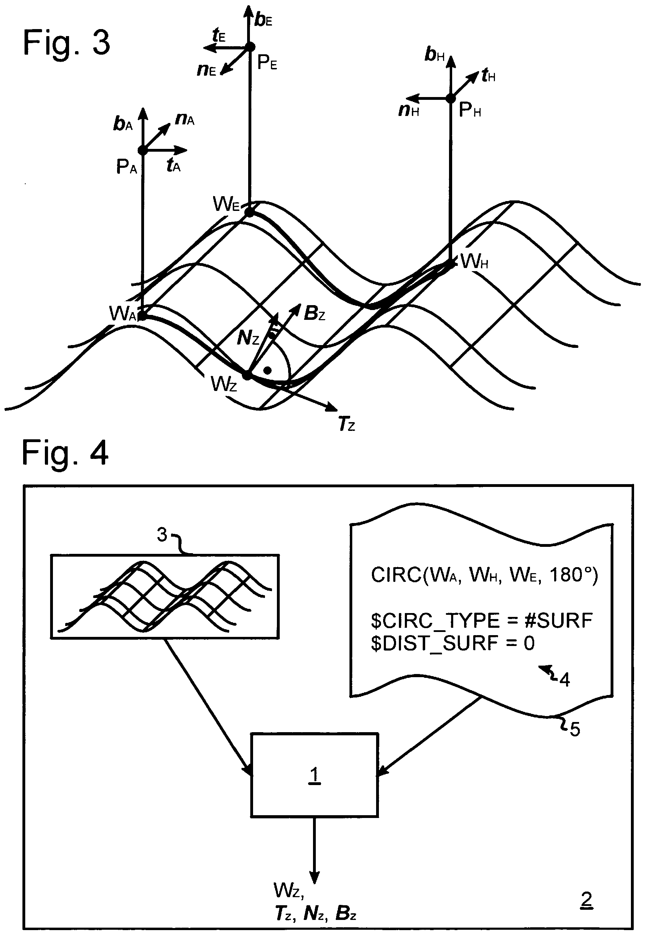

Fig. 4 zeigt ein Programmiermittel 2 gemäß einer Ausführung der vorliegenden Erfindung. Dabei können, wie vorstehend erläutert, die dargestellten Mittel gleichermaßen Hardware-Komponenten oder Software-Funktionalitäten symbolisieren.

Das Programmiermittel 2 weist erfindungsgemäß ein Parameterverarbeitungsmittel 1 auf. Dieses erhält von einem Bahnbestimmungsmittel 5 Programmanweisungen 4 für den Roboter 10, die vorschreiben, dass eine Kreisbahn über 180° durch die drei Punkte $W_A$, $W_H$ bzw. $W_E$ abgefahren werden soll (Fig. 4: "CIRC($W_A$, $W_H$, $W_E$, 180°)"), wobei das Werkzeug mit Abstand Null (Fig. 4: "\$DIST_SURF = 0") mit zur Werkstückoberfläche senkrechter Stoßrichtung (Fig. 4: "\$CIRC_TYPE = #SURF") sein soll.

Das Parameterverarbeitungsmittel 1 hat Zugriff auf ein Datenobjekt, welches die zur Ableitung kinematischer Modelldaten erforderlichen geometrischen Parameter des Modells 3 enthält oder nachbildet, beispielsweise die Kontrollpunkte der NURBS oder deren Basisfunktionen. Somit kann das Parameterverarbeitungsmittel 1 aus den geometrischen Parameter die Werkstückoberflächenbeschreibung $x(u,w)$, $y(u,w)$, $z(u,w)$ und hieraus die Oberflächennormale und -tangente zu jedem Punkt $(x, y, z)$ des Werkstückmodells 3 ableiten. Mit diesen Größen kann das Parameterverarbeitungsmittel 1 dann wie gewünscht eine in Fig. 3 fett ausgezogene Bahn generieren, deren Projektion in einer Tangentialebene durch die Punkte $W_A$, $W_H$ und $W_E$ kreisbogenförmig ist, und auf der der TCP mit einer stets zur Oberfläche senkrechten Stoßrichtung stets direkt auf der Werkstückoberfläche verfährt. Exemplarisch ist im Zwischenpunkt $W_Z$ dieser Bahn mit dem Tangentenvektor $T_Z$ und dem Normalenvektor $N_Z$ auf der Werkstückoberfläche und dem hierzu senkrechten Binormalenvektor $B_Z$ eingezeichnet.

In analoger Weise kann beispielsweise auch beim online-Programmieren, i.e. dem Steuern des Roboters durch den Anwender, der TCP auf dem Werkstück verfahren werden, indem das Parameterverarbeitungsmittel 1, ausgehend von empfangenen Steuerbefehlen bzw. Programmanweisungen, etwa "Bewegung in x-Richtung" oder "Drehung um Grundachse", den TCP dabei auf der Werkstückoberfläche nachführt und hierzu die erforderlichen kinematischen Modelldaten, etwa die Oberflächenpunkte, -normalen und -tangenten, ableitet.

Wird etwa eine TCP-Verschiebung um $\Delta x$, $\Delta y$ kommandiert, können für alle Interpolationspunkte $\Delta_i x$, $\Delta_i y$ aus $\Delta_i u(\Delta_i x, \Delta_i y)$, $\Delta_i w(\Delta_i x, \Delta_i y)$ die Koordinaten $\Delta_i z(\Delta_i u, \Delta_i w)$ des zugehörigen Oberflächenpunktes sowie dessen Oberflächentangente und - normale abgeleitet werden.

Gleichermaßen kann beispielsweise ein optimaler, zum Beispiel kürzester, Weg zwischen den Punkten $W_A$ und $W_H$ auf der Oberfläche bestimmt werden, indem ein Optimierer das Gütekriterium

$$\int_{W_A}^{W_E} \sqrt{dx^2(u(s),w(s)) + dy^2(u(s),w(s)) + dz^2(u(s),w(s))}\, ds$$ unter der Bedingung u = u(s), w = w(s) minimiert und so die Bahn x(s), y(s), z(s) des TCPs bestimmt.

Bezugszeichenliste

1    Parameterverarbeitungsmittel
2    Programmiermittel
3    CAD-Modell(daten)
4    Bahnbestimmungsmittel
5    Programmanweisungen
10   Roboter(werkzeug)

**Patentansprüche**

1. Programmiermittel (2) zum Programmieren eines Roboters (10) mit einem Parameterverarbeitungsmittel (1) zum Ableiten von kinematischen Modelldaten ($W_Z$, $\boldsymbol{T}_Z$, $\boldsymbol{N}_Z$, $\boldsymbol{B}_Z$) aus geometrischen Parametern eines Modells (3) eines Interaktionsobjektes des Roboters auf Basis von Programmanweisungen (5) für den Roboter, wobei kinematische Modelldaten Positionen von Punkten ($W_Z$), Linien, Flächen, Räumen, Referenzsystemen ([$\boldsymbol{T}_Z\, \boldsymbol{N}_Z\, \boldsymbol{B}_Z$]) und/oder Richtungen ($\boldsymbol{T}_Z$, $\boldsymbol{N}_Z$, $\boldsymbol{B}_Z$) relativ zu ausgezeichneten Merkmalen, insbesondere einer Oberfläche (3), des Modells des Interaktionsobjektes umfassen,
**dadurch gekennzeichnet, dass**
das Parameterverarbeitungsmittel (1) dazu eingerichtet ist, aus den geometrischen Parametern des Modells (3) eine Oberflächennormale ($N_Z$), einen Tangentenvektor ($T_Z$) und einen Binormalenvektor ($B_Z$) abzuleiten, die zusammen ein begleitendes Koordinatensystem definieren.

2. Programmiermittel nach Anspruch 1, **dadurch gekennzeichnet, dass** das Modell des Interaktionsobjektes ein CAD-Modell (3) eines Werkstückes und/oder einer Roboterumgebung umfasst.

3. Programmiermittel nach einem der vorhergehenden Ansprüche, **dadurch gekennzeichnet, dass** geometrische Parameter des Modells (3) des Interaktionsobjektes dieses, wenigstens teilweise, insbesondere generisch, definieren.

4. Programmiermittel nach einem der vorhergehenden Ansprüche, **dadurch gekennzeichnet, dass** Programmanweisungen für den Roboter Bewegungen und/oder Aktionen des Roboters definieren.

5. Programmiermittel nach einem der vorhergehenden Ansprüche, **dadurch gekennzeichnet, dass** das Parameterverarbeitungsmittel zum Ableiten von kinematischen Modelldaten während des Programmierens, insbesondere während des Betriebs des Roboters ausgebildet ist.

6. Programmiermittel nach einem der vorhergehenden Ansprüche, **gekennzeichnet durch** ein Bahnbestimmungsmittel (5) zum Bestimmen einer Bahn des Roboters auf Basis des Modells des Interaktionsobjektes.

7. Programmiermittel nach einem der vorhergehenden Ansprüche, **dadurch gekennzeichnet, dass** ein Relativparameter, insbesondere ein Abstand und/oder Winkel, kinematischer Modelldaten relativ zu dem Modell des Interaktionsobjektes vorgebbar ist.

8. Programmiermittel nach einem der vorhergehenden Ansprüche, **dadurch gekennzeichnet, dass** das Modell (3) des Interaktionsobjektes als Datenobjekt in dem Programmiermittel implementiert ist.

9. Verfahren zum Programmieren eines Roboters (10) mittels eines Programmiermittels (2) nach einem der vorhergehenden Ansprüche, wobei kinematische Modelldaten ($W_z$, $T_z$, $N_z$, $B_z$) automatisch aus geometrischen Parametern des Modells (3) des Interaktionsobjektes des Roboters auf Basis von Programmanweisungen (5) für den Roboter abgeleitet werden.

10. Computerprogrammprodukt mit auf einem maschinenlesbaren Träger gespeicherten Programmcode, der ein Verfahren nach Anspruch 9 ausführt, wenn er in einem Mittel nach einem der vorhergehenden Ansprüche 1 bis 8 abläuft.

## Claims

1. A Programming means (2) for programming a robot (10) comprising a parameter processing means (1) for deviating kinematic model data ($W_z$, $T_z$, $N_z$, $B_z$) from geometric parameters of a model (3) of an interaction object of the robot based on program instructions (5) for the robot, wherein
   kinematic model data comprise positions of points ($W_z$), lines, surfaces, spaces, reference systems ($[T_z\ N_z\ B_z]$) and/or directions ($T_z$, $N_z$, $B_z$) relative to particular features, in particular a surface (3), of the model of the interaction object,
   **characterized in that**
   the parameter processing means (1) is configured to derive from the geometric parameters of the model (3) a surface normal ($N_z$), a tangent vector ($T_z$) and a binormal vector ($B_z$) which together define an accompanying coordinate system.

2. The programming means according to claim 1, **characterized in that** the model of the interaction object comprises a CAD model (3) of a workpiece and/or of a robot environment.

3. The programming means according to one of the preceding claims, **characterized in that** geometric parameters of the model (3) of the interaction object define the interaction object at least partially, in particular in a generic manner.

4. The programming means according to one of the preceding claims, **characterized in that** program instructions for the robot define movements and/or actions of the robot.

5. The programming means according to one of the preceding claims, **characterized in that** the parameter processing means is configured for deviating kinematic model data during programming, in particular during operation of the robot.

6. The programming means according to one of the preceding claims, **characterized by** a path determining means (5) for determining a path of the robot based on the model of the interaction object.

7. The programming means according to one of the preceding claims, **characterized in that** a relative parameter, in particular a distance and/or an angle, of kinematic model data is predefinable relative to the model of the interaction object.

8. The programming means according to one of the preceding claims, **characterized in that** the model (3) of the interaction object is implemented as a data object in the programming means.

9. A method for programming a robot (10) by means of the programming means (2) according to one of the preceding claims, wherein kinematic model data ($W_z$, $T_z$, $N_z$, $B_z$) are derived automatically from geometric parameters of the model (3) of the interaction object of the robot based on program instructions (5) for the robot.

10. A computer program product comprising program code which is stored on a machine-readable carrier, wherein the program code executes a method according to claim 9 when it runs in the means according to one of the preceding claims 1 to 8.

## Revendications

1. Moyen de programmation (2) destiné à programmer un robot (10), comprenant un moyen de traitement de paramètres (1) destiné à déduire des données de modèle cinématique ($W_z$, $T_z$, $N_z$, $B_z$) de paramètres géométriques d'un modèle (3) d'un objet en interaction avec le robot sur la base d'instructions de programme (5) pour le robot,
les données de modèle cinématique comportant des positions de points ($W_z$), de lignes, de surfaces, d'espaces, de systèmes de référence ($[T_z, N_z, B_z]$) et/ou de directions ($T_z, N_z, B_z$) par rapport à d'excellentes caractéristiques, en particulier une surface (3), du modèle de l'objet en interaction,

**caractérisé en ce que**
le moyen de traitement de paramètres (1) est conçu pour déduire des paramètres géométriques du modèle (3) une normale à une surface ($N_z$), un vecteur de tangente ($T_z$) et un bivecteur normal ($B_z$), qui définissent conjointement un système de coordonnées concomitant.

2. Moyen de programmation selon la revendication 1, **caractérisé en ce que** le modèle de l'objet en interaction comprend un modèle CAO (3) d'une pièce et/ou d'un environnement du robot.

3. Moyen de programmation selon l'une quelconque des revendications précédentes, **caractérisé en ce que** les paramètres géométriques du modèle (3) de l'objet en interaction définissent ce dernier, au moins en partie, en particulier de manière générique.

4. Moyen de programmation selon l'une quelconque des revendications précédentes, **caractérisé en ce que** les instructions de programme pour le robot sont des mouvements et/ou des actions du robot.

5. Moyen de programmation selon l'une quelconque des revendications précédentes, **caractérisé en ce que** le moyen de traitement de paramètres est conçu pour déduire des modèles de données cinématiques pendant la programmation, en particulier pendant le fonctionnement du robot.

6. Moyen de programmation selon l'une quelconque des revendications précédentes, **caractérisé par** un moyen de détermination de trajectoire (5) destiné à déterminer une trajectoire du robot sur la base du modèle de l'objet en interaction.

7. Moyen de programmation selon l'une quelconque des revendications précédentes, **caractérisé en ce qu'**un paramètre relatif, en particulier un écart et/ou un angle, des données de modèles cinématiques par rapport au modèle de l'objet en interaction peut être prédéfini.

8. Moyen de programmation selon l'une quelconque des revendications précédentes, **caractérisé en ce que** le modèle (3) de l'objet en interaction est implémenté sous la forme d'un objet de données dans le moyen de programmation.

9. Procédé de programmation d'un robot (10) à l'aide d'un moyen de programmation (2) selon l'une quelconque des revendications précédentes, des données de modèle cinématique ($W_z, T_z, N_z, B_z$) étant déduites automatiquement des paramètres géométriques du modèle (3) d'un objet en interaction avec le robot sur la base d'instructions de programme (5) pour le robot.

10. Produit-programme informatique comprenant un code de programme qui est mis en mémoire sur un support pouvant être lu par une machine et qui met en oeuvre un procédé selon la revendication 9, lorsqu'il s'exécute dans un moyen selon l'une quelconque des revendications 1 à 8.

# Fig. 1

# Fig. 2

## Fig. 3

## Fig. 4

CIRC(W_A, W_H, W_E, 180°)

$CIRC_TYPE = #SURF
$DIST_SURF = 0

**EP 2 420 360 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1777600 B1
- US 6292715 B1
- EP 2082850 A2
- US 20060181236 A1
- DE 102008027475 A1
- US 5396160 A
- EP 1777600 A1
- EP 2345512 A1